# EUROPÄISCHE PATENTANMELDUNG

(11) **EP 1 972 400 A2**
(43) Veröffentlichungstag der Anmeldung: **24.09.2008**
(21) Anmeldenummer: 08004799.6
(22) Anmeldetag: 14.03.2008
(51) Int. Cl.: B23D 33/02, B23D 21/08

(54) **Vorrichtung zur Abstützung eines Rohrschneiders**

(30) Priorität: 23.03.2007 DE 202007004482 U
(71) Anmelder: Roland Baumann Ingenieurbuero, 89081 Ulm (DE)
(72) Erfinder: Baumann, Roland, 89134 Blaustein (DE)
(74) Vertreter: Schmid, Wolfgang

(57) **Zusammenfassung**

Die Erfindung betrifft eine Vorrichtung zur Abstützung eines Rohrschneiders beim Abschneiden eines Rohres, insbesondere eines Wellrohres für eine Solaranlage, mit wenigstens einem im wesentlichen zylindrischen Abstützkörper, dessen Außendurchmesser geringer ist als der Innendurchmesser des abzuschneidenden Rohres, und mit wenigstens einem sich an den zylindrischen Abstützkörper anschließenden, in radialer Richtung über denselben hinaus stehenden Anschlagelement für das Rohr.

## Beschreibung

Die Erfindung betrifft eine Vorrichtung zur Abstützung eines Rohrschneiders beim Abschneiden eines Rohres, insbesondere eines Wellrohres für eine Solaranlage.

Aus dem Stand der Technik sind Rohrschneider in den verschiedensten Ausführungsformen bekannt. Zum Schneiden von Wellrohren, wie sie bei Anschlüssen von Solaranlagen sehr häufig zum Einsatz kommen, werden ausschließlich manuell zu bedienende Rohrschneider verwendet, da die Rohre auf der Baustelle abgeschnitten werden müssen, um sie auf die für den jeweiligen Anschluss richtige Länge zu bringen. Einen derartigen Rohrschneider beschreibt beispielsweise die EP 0 756 530 B1.

Problematisch dabei ist jedoch, dass der Rohrschneider, der in diesem Fall ein Schneid- und zwei Stützräder aufweist, kippt, sobald das Schneidrad das Rohr durchgeschnitten hat, da die bis zum Durchschneiden des Rohres gegebene Führung dann nicht mehr vorhanden ist. Dies führt meist zu einer sehr ungenauen Schneidkante, die außerdem Grate sowie scharfe Ecken und Kanten aufweisen kann, was in jedem Fall als störend angesehen wird, zu Dichtungsproblemen und sogar zu Schnittverletzungen beim Bediener führen kann.

Es ist daher Aufgabe der vorliegenden Erfindung, eine Vorrichtung zur Abstützung eines Rohrschneiders beim Abschneiden eines Rohres zu schaffen, der einfach aufgebaut ist und der ein sauberes und insbesondere gratfreies Abschneiden des Rohres gewährleistet.

Erfindungsgemäß wird diese Aufgabe durch die in Anspruch 1 genannten Merkmale gelöst.

Mittels der erfindungsgemäßen Vorrichtung, welche wenigstens einen zylindrischen Abstützkörper aufweist, ist auch in dem Fall eine sichere Führung des Schneidrads des Rohrschneiders gewährleistet, in dem das Schneidrad das Rohr durchbricht, da dieses Schneidrad dann auf dem im wesentlichen zylindrischen Abstützkörper läuft und sich dort abstützt. Somit wird ein Verkippen des Rohrschneiders verhindert und ein sauberer Schnitt sichergestellt.

Durch das sich an den wenigstens einen zylindrischen Abstützkörper anschließende Anschlagelement für das Rohr wird verhindert, dass die gesamte Vorrichtung in das abzuschneidende Rohr fallen kann, wodurch die Handhabung der erfindungsgemäßen Vorrichtung erheblich vereinfacht wird.

In einer vorteilhaften Weiterbildung der Erfindung kann vorgesehen sein, dass das wenigstens eine Anschlagelement als umlaufender Bund ausgebildet ist, dessen Außendurchmesser größer ist als der Innendurchmesser des Rohres. Hierdurch wird eine gleichmäßige Anlage der Vorrichtung an dem abzuschneidenden Rohr gewährleistet und damit eine gleichmäßige Abstützung des Rohrschneiders sichergestellt. Ein weiterer Vorteil eines derartigen umlaufenden Bundes ist die einfache Herstellbarkeit desselben, da dieser dann ebenso wie die Abstützkörper selbst zylindrisch ausgeführt ist.

Um unterschiedliche Durchmesser der abzuschneidenden Rohre mit ein und derselben Vorrichtung abdecken zu können, kann in einer weiteren vorteilhaften Ausgestaltung der Erfindung vorgesehen sein, dass mehrere miteinander verbundene zylindrische Abstützkörper vorgesehen sind, welche unterschiedliche Außendurchmesser aufweisen, wobei die Abstützkörper nach der Größe ihres Außendurchmessers aufeinanderfolgend angeordnet sind.

In diesem Zusammenhang kann sich eine erhebliche Materialeinsparung und eine Verringerung der Gesamtlänge der Vorrichtung ergeben, wenn ein Abstützkörper mit einem größeren Außendurchmesser das Anschlagelement für den Abstützkörper mit einem kleineren Außendurchmesser bildet.

Um eine weitere Materialeinsparung zu realisieren und gleichzeitig die Masse der gesamten Vorrichtung zu verringern, kann außerdem vorgesehen sein, dass der wenigstens eine Abstützkörper eine Durchgangsbohrung aufweist.

Weitere vorteilhafte Ausgestaltungen und Weiterbildungen der Erfindung ergeben sich aus den restlichen Unteransprüchen. Nachfolgend sind Ausführungsbeispiele der Erfindung anhand der Zeichnung prinzipmäßig dargestellt.

Es zeigt:
- Fig. 1: eine schematische Darstellung eines zum Abschneiden eines Rohres verwendeten Rohrschneiders sowie die in das abzuschneidende Rohr eingeführte erfindungsgemäße Vorrichtung zur Abstützung des Rohrschneiders;
- Fig. 2: eine Seitenansicht einer ersten Ausführungsform der erfindungsgemäßen Vorrichtung;
- Fig. 3: einen Schnitt nach der Linie III-III aus Fig. 2;
- Fig. 4: eine Seitenansicht einer zweiten Ausführungsform der erfindungsgemäßen Vorrichtung; und
- Fig. 5: einen Schnitt nach der Linie V-V aus Fig. 4.

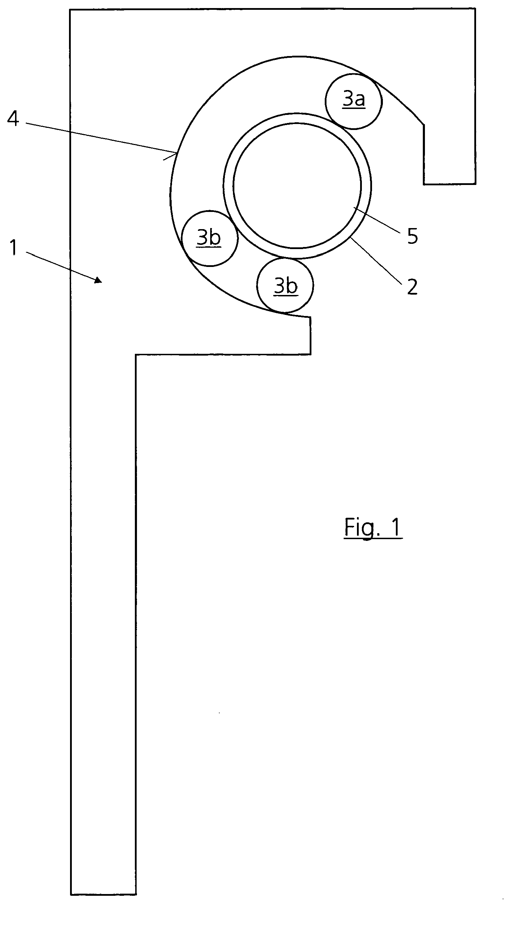

Fig. 1 zeigt auf sehr schematische Art und Weise einen Rohrschneider 1, der zum Abschneiden eines Rohres 2, im vorliegenden Fall eines insbesondere aus Edelstahl bestehenden Wellrohres, wie es zur Verrohrung einer Solaranlage eingesetzt wird, dient. Der Rohrschneider 1 weist in an sich bekannter Weise ein Schneidrad 3a und zwei Stütz- bzw. Führungsräder 3b auf, die in einer Führung 4 des Rohrschneiders 1 gehalten sind. Zum Abschneiden des Rohres 2 werden das Schneidrad 3a und die Stützräder 3b an das Rohr 2 angelegt und um den Umfang desselben bewegt. Eine Einrichtung zum Einstellen des Abstandes des Schneidrads 3a und/oder der Stützräder 3b ist nicht dargestellt, da sie von an sich bekannter Bauart sein kann. Selbstverständlich kann die Anzahl der Schneid- und/oder Stütz- bzw. Führungsräder 3a und 3b von der dargestellten Anzahl abweichen.

Um ein Abkippen des Rohrschneiders 1 in dem Moment, in dem das Rohr 2 von dem Schneidrad 3a durchtrennt wird, zu verhindern, ist eine Vorrichtung 5 zur Abstützung des Rohrschneiders 1 vorgesehen, welche bei der Darstellung gemäß Fig. 1 in das Rohr 2 eingeführt und daher nur unvollständig zu erkennen ist. Die Vorrichtung 5 zur Abstützung des Rohrschneiders 1 kann auch als Abschneidehilfe für das Rohr 2 bezeichnet werden.

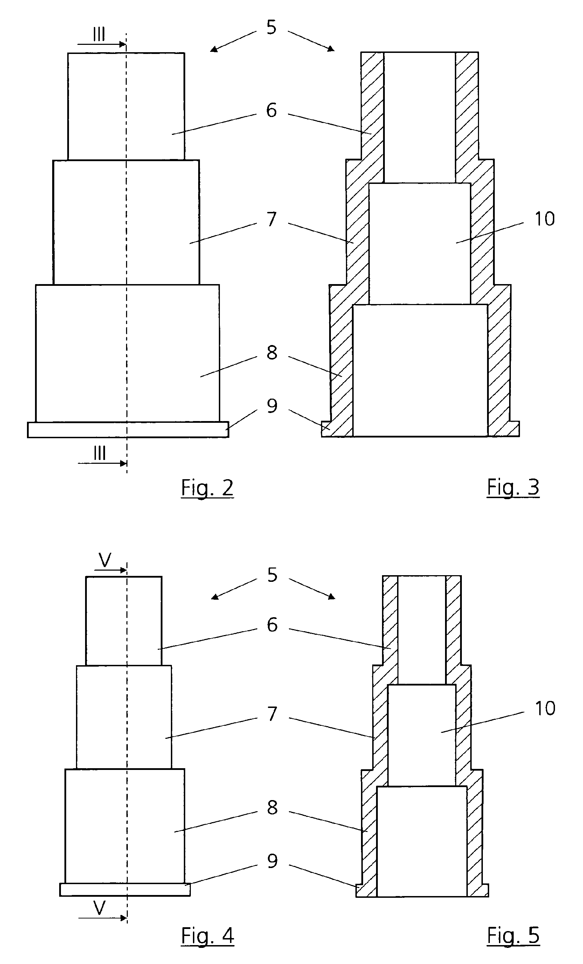

In den Figuren 2 bis 5 ist die Vorrichtung 5 detaillierter dargestellt. Die Vorrichtung 5 weist in den beiden dargestellten Ausführungsformen jeweils drei im wesentlichen zylindrische Abstützkörper 6, 7 und 8 auf, von dem der jeweils zu dem abzuschneidenden Rohr 2 passende Abstützkörper 6, 7 oder 8 einen Außendurchmesser aufweist, der möglichst geringfügig kleiner ist als der Innendurchmesser des Rohres 2. An den Abstützkörper mit dem größten Außendurchmesser, im vorliegenden Fall an den Abstützkörper 8, schließt sich ein in radialer Richtung über denselben hinausstehendes Anschlagelement 9 an, welches im vorliegenden Fall als umlaufender Bund ausgebildet ist, dessen Außendurchmesser größer ist als der Innendurchmesser des größten, zu der Vorrichtung 5 passenden Rohres 2.

Bei der in den Figuren 2 und 3 dargestellten Ausführungsform weist der kleinste Abstützkörper, nämlich der Abstützkörper 6, einen Außendurchmesser von geringfügig weniger als 16 mm auf, der Abstützkörper 7 weist einen Außendurchmesser von geringfügig weniger als 20 mm auf und der Abstützkörper 8 weist einen Au-ßendurchmesser von geringfügig weniger als 25 mm auf. Der umlaufende Bund weist in diesem Fall einen Außendurchmesser von ca. 27 mm auf. Bei der Ausführungsform der Figuren 4 und 5 sind ebenfalls drei Abstützkörper 6, 7 und 8 vorgesehen, die Außendurchmesser von jeweils geringfügig weniger als 10 mm, 12 mm und 16 mm aufweisen. Mit den Worten "geringfügig weniger als" ist in diesem Fall die Unterschreitung des Innendurchmessers des abzuschneidenden Rohres 2 um ca. 0,2 - 0,5 mm gemeint. Auf diese Weise kann die Vorrichtung 5 sehr gut ohne zu verklemmen in das Rohr 2 eingeführt werden. Der umlaufende Bund weist in diesem Fall einen Außendurchmesser von ca. 18 mm auf. Das Rohr 2 ist in jeweils gestrichelt in seinen drei möglichen Positionen gegenüber der Vorrichtung 5 dargestellt.

In einer weiteren Ausführungsform der Vorrichtung 5 zur Abstützung des Rohrschneiders 1 kann vorgesehen sein, dass die drei Abstützkörper 6, 7 und 8 Außendurchmesser von jeweils geringfügig weniger als 25 mm, 32 mm und 40 mm aufweisen. Damit sind durch die Vorrichtung 5 Wellrohre mit den gängigsten Innendurchmessern abgedeckt, wobei jede der unterschiedlichen Vorrichtungen 5 für drei unterschiedliche Durchmesser von Rohren 2 verwendbar ist. Die Anzahl von drei Abstützkörpern 6, 7 und 8 hat sich als besonders geeignet erwiesen, da die Vorrichtung 5 auf diese Weise sehr flexibel, nämlich bei drei verschiedenen Rohren 2, eingesetzt werden kann, andererseits jedoch die Gesamtlänge der Vorrichtung 5 nicht zu groß ist, sodass sie nicht unhandlich wird und das Biegen des Rohres 2 nicht beeinträchtigt.

Die Länge der Abstützkörper 6, 7 und 8 beträgt im vorliegenden Fall jeweils ca. 10 bis 20 mm, so dass in jedem Fall eine ausreichende Länge gegeben ist, über welche das Rohr 2 abgeschnitten werden kann und der Rohrschneider 1 dabei durch die Vorrichtung 5 abgestützt wird.

Durch die nach der Größe ihres Außendurchmessers aufeinanderfolgend angeordneten Abstützkörper 6, 7 und 8 und die somit entstehende Stufenform der Vorrichtung 5 bildet jeweils der Abstützkörper mit dem größeren Außendurchmesser das Anschlagelement 9 für den Einsatz des Abstützkörpers mit dem kleineren Außendurchmesser. Beispielsweise bildet der Abstützkörper 7 das Anschlagelement 9 für den Abstützkörper 6 und der Abstützkörper 8 bildet das Anschlagelement 9 für den Abstützkörper 7.

Dadurch, dass der nächstgrößere Abstützkörper 7 oder 8 in allen drei Ausführungsformen nur geringfügig größer ist als der vorhergehende Abstützkörper 6 oder 7, ist der nächstgrößere, sich außerhalb des Rohres 2 befindliche und das Anschlagelement 9 bildende Abstützkörper 7 oder 8 nicht erheblich größer oder sogar kleiner als der Außendurchmesser des Rohres 2, so dass der Einsatz des Rohrschneiders 1 durch die Vorrichtung 5 nicht behindert wird.

Wie in den beiden Schnittdarstellungen von Fig. 3 und Fig. 5 zu erkennen ist, weist die Vorrichtung 5 eine Durchgangsbohrung 10 auf, die stufenförmig ausgebildet ist, sodass die Abstützkörper 6, 7 und 8 jeweils eine im wesentlichen gleichmäßige Wandungsstärke aufweisen. Vorzugweise besteht die Vorrichtung 5 aus einem Kunststoffmaterial und kann beispielsweise durch Spritzgie-ßen hergestellt werden. Dabei sollte ein Material mit einer ausreichenden Härte ausgewählt werden, um eine zu starke Beschädigung der Vorrichtung 5 durch das Schneidrad 3a des Rohrschneider 1 zu verhindern.

Der Einsatz der Vorrichtung 5 kann nach einem beispielsweise auch mittels einer Säge durchführbaren groben Vorschnitt in einem Fertig- bzw. Feinschnitt bestehen, in dem das Rohr 2 mit dem Rohrschneider 1 auf eine korrekte Länge gebracht und eine exakte Vorderkante im Sinne eines Fertigschnitts erstellt wird.

## Patentansprüche

1. Vorrichtung zur Abstützung eines Rohrschneiders (1) beim Abschneiden eines Rohres (2), insbesondere eines Wellrohres für eine Solaranlage, mit wenigstens einem im wesentlichen zylindrischen Abstützkörper (6,7,8), dessen Außendurchmesser geringer ist als der Innendurchmesser des abzuschneidenden Rohres (2), und mit wenigstens einem sich an den zylindrischen Abstützkörper (6,7,8) anschließenden, in radialer Richtung über denselben hinaus stehenden Anschlagelement (9) für das Rohr (2).

2. Vorrichtung nach Anspruch 1,
**dadurch gekennzeichnet, dass**
das wenigstens eine Anschlagelement (6,7,8) als umlaufender Bund ausgebildet ist, dessen Außendurchmesser größer ist als der Innendurchmesser des Rohres (2).

3. Vorrichtung nach Anspruch 1 oder 2,
**dadurch gekennzeichnet, dass**
mehrere miteinander verbundene zylindrische Abstützkörper (6,7,8) vorgesehen sind, welche unterschiedliche Außendurchmesser aufweisen, wobei die Abstützkörper (6,7,8) nach der Größe ihres Außendurchmessers aufeinanderfolgend angeordnet sind.

4. Vorrichtung nach Anspruch 3,
**dadurch gekennzeichnet, dass**
ein Abstützkörper (7,8) mit einem größeren Außendurchmesser das Anschlagelement (9) für den Einsatz des Abstützkörpers (6,7) mit einem kleineren Außendurchmesser bildet.

5. Vorrichtung nach Anspruch 3 oder 4,
**dadurch gekennzeichnet, dass**
drei zylindrische Abstützkörper (6,7,8) vorgesehen sind, welche Außendurchmesser von jeweils geringfügig weniger als 16 mm, 20 mm und 25 mm aufweisen.

6. Vorrichtung nach Anspruch 3 oder 4,
**dadurch gekennzeichnet, dass** drei zylindrische Abstützkörper (6,7,8) vorgesehen sind, welche Außendurchmesser von jeweils geringfügig weniger als 25 mm, 32 mm und 40 mm aufweisen.

7. Vorrichtung nach Anspruch 3 oder 4,
**dadurch gekennzeichnet, dass**
drei zylindrische Abstützkörper (6,7,8) vorgesehen sind, welche Außendurchmesser von jeweils geringfügig weniger als 10 mm, 12 mm und 16 mm aufweisen.

8. Vorrichtung nach einem der Ansprüche 1 bis 7,
**dadurch gekennzeichnet, dass**
der wenigstens eine Abstützkörper (6,7,8) eine Durchgangsbohrung (10) aufweist.

9. Vorrichtung nach einem der Ansprüche 1 bis 8,
**dadurch gekennzeichnet, dass**
sie aus einem Kunststoffmaterial besteht.
